# EUROPÄISCHE PATENTSCHRIFT

(11) **EP 0 622 053 B1**
(45) Veröffentlichungstag und Bekanntmachung des Hinweises auf die Patenterteilung: **24.06.1998**
(21) Anmeldenummer: 94850066.5
(22) Anmeldetag: 26.04.1994
(51) Int. Cl.: A61C 8/00

(54) **Prothesensystem zur Rehabilitierung von Zahnlosigkeit**
Rehabilitation prostetic system for toothlessness
Système de prothèses pour la réhabilitation pour personnes édentés

(30) Priorität: 28.04.1993 SE 9301424
(43) Veröffentlichungstag der Anmeldung: 02.11.1994
(73) Patentinhaber: MEDEVELOP AKTIEBOLAG, S-402 29 Göteborg (SE)
(72) Erfinder: Branemark, Per-Ingvar, S-431 69 Mölndal (SE)
(74) Vertreter: Karlsson, Leif Karl Gunnar

(56) Entgegenhaltungen:
- WO-A-85/02337
- US-A- 3 866 321
- US-A- 4 931 016

## Beschreibung

Die vorliegende Erfindung betrifft ein Prothesensystem gemäss dem Oberbegriff des Anspruchs 1.

Die Kieferimplantation von Fixturen bei Zahnlosigkeit ist bekannt. Um die permanente Verankerung der Fixturen zu gewährleisten, müssen eine Anzahl von Voraussetzungen erfüllt sein, u.a. bezüglich Materialwahl und Operationstechnik. In der Praxis haben von Professor P.I. Brånemark entwickelte Fixturen oder Verankerungselemente, die von der schwedischen Firma Nobelpharma unter dem Warenzeichen BRÅNEMARK SYSTEM® vertrieben werden, eine äusserst gute Langzeitverankerung gezeigt. Diese Fixturen haben eine besondere Oberflächenstruktur, die aus dicht aneinanderliegenden Mikrodellen besteht - vgl. hierzu US 4330.891 - und die zwecks Erzielung einer optimalen Osseointegration mit den Zellausläufern der Gewebezellen zusammenwirken. Die schraubenförmigen Fixturen werden in den Kieferknochen einoperiert und nach einer gewissen Zeitspanne, im allgemeinen nach einigen Monaten, d. h. nach dem Einheilen in das Gewebe, können diese Fixturen als Halteorgane für künstliche Zähne und Zahnbrücken verwendet werden.

In der schwedischen Auslegeschrift Nr. 448 599 (Patentanmeldung Nr. 8503580-6) ist eine Vorrichtung zur Befestigung einer Zahnreihe an wenigstens zwei im Kieferknochen implantierten Fixturen beschrieben, wobei die Vorrichtung eine an den Fixturen befestigte, starre Schiene aus Titan und Montageorgane zur lösbaren Fixierung der Zahnreihe auf der Schiene umfasst. Zwischen der Zahnreihe und der Schiene ist ein elastisches Dämpfungsorgan vorgesehen.

Durch die WO-A-85102337 (schwedische Auslegeschrift Nr. 446 370 (Patentanmeldung Nr. 8306535-9)) ist auch bekannt, für die Befestigung einer Zahnprothese an implantierten Fixturen ein pfeilerförmiges Zwischenstück zu verwenden, das an seinem einen Ende ein Aussengewinde zur Befestigung in einer mit Innengewinde versehenen Bohrung der Fixtur aufweist. An seinem anderen Ende verjüngt sich die Fixtur konisch zwecks Zusammenwirkens mit einer zwischen dem Zwischenstück und der Zahnprothese vorgesehenen kegelstumpfförmigen Hülse, die einen mit einem Zentrumloch versehenen Boden aufweist, von dem aus sie sich erweitert. Die Zahnprothese wird an dem in der Fixtur montierten Zwischenstück mittels einer Schraube oder einem ähnlichen Befestigungsorgan, das die Zahnprothese und das Zwischenstück mittels eines im Boden der konischen Hülse vorgesehenen Loches verbindet, befestigt.

Durch die US-A-4931016 ist weiter ein Prothesensystem gemäß dem Oberbegriff von Anspruch 1 bekannt, in welchem die Elemente, insbesondere das Brückenteil, nach individueller Anpassung an den Patienten, hergestellt sind.

Die Montage der Zahnbrücken ist mit einem erheblichen Arbeitseinsatz verbunden, weshalb die Kosten der Zahnrekonstruktion eines gesamten Ober- oder Unterkiefers verhältnismässig hoch sind. Ausserdem nimmt diese Rekonstruktion, auch was den Patienten anbelangt, viel Zeit in Anspruch.

Aufgabe vorliegender Erfindung ist die Schaffung einer anwendungsfreundlichen Lösung für die Montage derartiger Vollkieferrekonstruktionen - wie auch Rekonstruktionen, die nur einen zusammenhängenden Teil einer Zahnreihe betreffen - und den hierzu benötigten Zeit- und Arbeitsaufwand wesentlich vermindern.

Diese Aufgabe wird mit einem gattungsgemässen Prothesensystem mit den Merkmalen des kennzeichnenden Teils des Anspruchs 1 gelöst.

Durch das Anordnen eines von der eigentlichen Zahnbrücke getrennten Brückenteiles werden wesentliche Vorteile bezüglich des flexiblen Aufbaus der Prothese, Anpassung der Prothese an den Patienten sowie Montage und Belastungs- und Festigkeitseigenschaften erzielt.

Vorzugsweise hat das Profilelement an seiner Unterseite eine Längsnut zur Aufnahme des Brückenteiles. Die Seitenwände dieser Nute oder Furche haben in Richtung zur Zahnreihe gerade oder gekrümmte Neigung zum Zweck des Anliegens gegen die Oberseite und die Vorder- bzw. Hinterseite des Brückenteiles. Diese Ausbildung des Profils bringt eine exakte Fixierung deren Lage mit sich und entlastet die Befestigungsorgane.

Vorzugsweise haben die Befestigungsmittel der Zahnbrükke am Brückenteil wesentlich horizontale Ausdehnung. Dies hat den Vorteil, dass diese Mittel leicht verborgen werden können, was aus ästhetischen Gründen wünschenswert ist.

Bevorzugt ist auch, dass das Brückenteil auf seiner Unterseite mit jeweils einer zylindrischen Bohrung für jedes Zwischenstück versehen ist, wobei die Bohrung entweder durchgehend oder nicht durchgehend ist und zur Aufnahme eines zylinderförmigen Sitzabschnittes des Zwischenstücks vorgesehen ist.

Es ist weiters bevorzugt, dass der Sitzabschnitt des Zwischenstücks sich von Stützorganen zur Abstützung des Brückenelements in Richtung auf das obere Ende des Zwischenstücks erstreckt. Vorzugsweise ist das Zwischenstück an seinem unteren Ende mit einem Aussengewinde zur lösbaren Befestigung in einem Innengewinde der Fixtur versehen.

Gemäss einer zweiten Ausführungsform der Erfindung ist die Zahnbrücke auf ihrer dem Gaumen abgewandten Seite zumindest teilweise mit Kunststoffmaterial bekleidet, das eine biegsame, eine elastisch komprimierbare Innenschicht umgebende, Aussenschicht umfasst. Die Aussenschicht ist vorzugsweise an der unteren Vorder- und Hinterkante des Profilelements und an der Zahnbasis befestigt. Dies vervollständigt die vorteilhaften Eigenschaften der Prothese mit einem 'natürlichen' Gefühl.

Gemäss einer dritten Ausführungsform der Erfindung umfassen die Befestigungsmittel des Brückenteiles an den Zwischenstücken harte Schichten bildende Mittel, gewählt aus der Gruppe: schnellhärtende Kompositionen, wie härtbare Kunststoffe, insbesonders härtbare Isocyanate und Polyurethane, und Porzellanzement, Schraubenmittel oder deren Kombinationen. Dies führt dazu, dass die Prothese auch an im Kieferknochen weniger exakt fixierte Fixturen angepasst werden kann.

Bevorzugt ist auch, dass die Befestigungsmittel der Zahnbrücke am Brückenteil durch Löcher im Brückenteil geführte, im Profilelement lösbar fixierte zweite Schraubenmittel umfassen, was die Montage und temporäre Abnahme der Prothese zu Justierungszwecken erleichtert.

Um die Beanspruchung der Befestigung im Knochen zu verringern, ist es von Vorteil, Dämpfungsmittel zwischen der Zahnbrücke und dem Brückenteil vorzusehen. Vorzugsweise umfassen die Dämpfungsmittel polymere Stoffe.

Um das Eindringen von Feuchtigkeit zwischen dem Brückenteil und der Zahnbrücke zu verhindern (was zur Kolonisierung dieser Teile durch Mikroorganismen führen könnte), sind Abdichtmittel zwischen der Zahnbrücke und dem Brückenteil angebracht. Durch geeignete Materialwahl und Formgebung können die Dämpfungsmittel auch die Abdichtmittel umfassen.

Das erfindungsgemässe Prothesensystem ist zur Rehabilitierung von Zahnlosigkeit vorgesehen; letztere kann auf verschiedenen Ursachen beruhen, wie Verlust von Zähnen durch physische Gewaltanwendung und durch Parodontitis verursachter Zahnverlust.

Die Erfindung wird nachstehend anhand einer in den beiliegenden Zeichnungen gezeigten Ausführungsform näher beschrieben. Es zeigen:
- Fig. 1: eine Prinzipskizze der Anordnung des Prothesensystems im Verhältnis zum Unterkiefer, in perspektivischer Ansicht, schräg von vorn gesehen,
- Fig. 2: eine Prinzipskizze der Anordnung des Brückenteiles für das Prothesensystem aus Fig. 1 am Unterkiefer, in Draufsicht,
- Fig. 3: das Brückenteil aus Fig. 2, in perspektivischer Ansicht,
- Fig. 4: das Prothesensystem in Fig. 2, im vertikalen Schnitt A - A nach Fig. 2, ohne Fixturen,
- Fig. 5: eine Teilansicht, nur teilweise im Schnitt, des Prothesensystems nach Fig. 4, mit Fixturen,
- Fig. 6: das Prothesensystem nach Fig. 1, im Vertikalschnitt B - B nach Fig. 3, ohne Fixturen,
- Fig. 7: eine Variante des Prothesensystems aus Fig. 1, in einer der Fig. 4 entsprechenden Ansicht, und
- Fig. 8: eine andere Variante des Prothesensystems nach Fig. 1, in einer der Fig. 4 entsprechenden Ansicht.

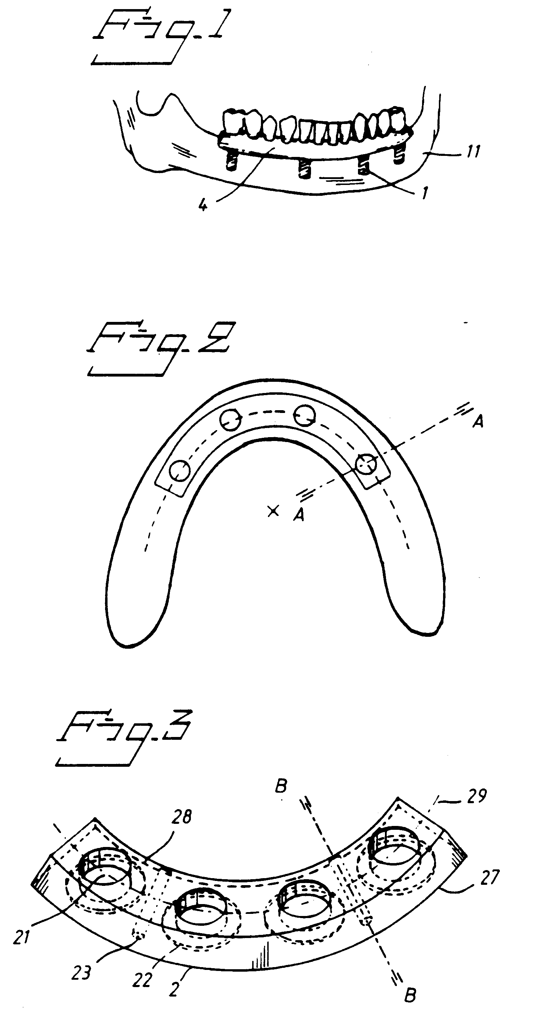

Das in Fig. 1 auf einem Unterkiefer mittels vier Fixturen 1 befestigte Prothesensystem umfasst ausser den Fixturen 1 ein in Fig. 1 nicht sichtbares Brückenteil 2, eine Zahnbrücke 4, die das Brückenteil 2 teilweise umgibt, und vier gleichermassen nicht sichtbare Zwischenstücke 3.

Die aus Titan hergestellten Fixturen 1 sind von bekannter Konstruktion. Sie haben im wesentlichen zylindrische Form und sind auf ihrer Aussenseite mit einem Gewinde zum Einschrauben in vorgebohrte und eventuell mit einem Innengewinde versehene Löcher im Unterkiefer 11 versehen. Die Fixturen 1 sind so weit in den Unterkiefer 11 eingeschraubt, dass ihre freien Enden etwa in der Grenzzone zwischen dem Kiefer 11 und dem weichen Gewebe 12 des Gaumens liegen. Die freien Enden sind mit Bohrungen mit Innengewinde zur Montage der eigentlichen Prothese versehen, die aus einzelnen Zähnen oder einer Zahnbrücke bestehen kann. Im vorliegenden Fall erfolgt die Montage mittels der vier Zwischenstücke 3. Wie in Fig. 5 angedeutet, ist der untere Teil 33 des Zwischenstücks 3 mit einem Aussengewinde 34 versehen und im übrigen für einen optimalen Sitz gegen die freie Endpartie der Fixtur 1 ausgebildet.

Das Zwischenstück 3 aus Titan ist rotationssymmetrisch und besteht aus einem zylindrischen Körper 32 mit einem Endteil 35, der vom Körper 32 durch einen umlaufenden Ringflansch 31 mit abgerundetem Übergang zum Körper 32, getrennt ist. Ein Sechskantloch 36 im Endteil 35 ist zum Eingriff eines Werkzeugs bei der Montage des Zwischenstücks 3 an der Fixtur 1 vorgesehen.

Das Brückenteil 2 besteht zweckmässig aus Titan und ist, wie aus Fig. 3 ersichtlich, bogenförmig mit einem trapezförmigen Querschnitt. Diese Bogenform ist der Form der Oberseite des Kieferteils 11 angepasst, auf welchem dieses Brückenteil mittels der Fixturen 1 und der Zwischenstücke 3 montiert werden soll. Das Brückenteil 2 ist mit vier, in ungefähr gleichem Längsabstand angeordneten Löchern 21 versehen, die die Oberseite des Brückenteiles 2 mit deren Unterseite verbinden. Zentrumsymmetrisch mit jedem der Löcher 21 sind an der Unterseite des Brückenteiles 2 flache ringförmige Ausnehmungen 22 ausgefräst, deren Radius etwas grösser ist als der Radius des Flansches 31 auf dem Zwischenstück 3. Zwei im wesentlichen radielle, zur Ober- und Unterseite des Brückenteiles 2 parallele und zwischen jeweils zwei Löchern 21 vorgesehene Bohrungen 23 verbinden die Vorderseite des Brückenteiles 2 mit ihrer der Zunge zugekehrten Rückseite.

Die Zahnbrücke 4 ist um ein U-förmiges Profilelement 41 aus Titan als Kern aufgebaut; das Profilelement 41 hat abgeschrägte Schenkel und im wesentlichen die gleiche Länge wie das Brückenelement 2. Die Innenseite des Profilelements 41 hat trapezförmigen Querschnitt und ist formkongruent mit der Aussenseite (Ober-, Vorder- und Rückseite) des Brückenelements 2 und somit gegen dieses anliegbar. Auf seiner Oberseite sind am Profilelement 41 in dessen Längsrichtung Zähne 6 befestigt, die, bezüglich Anzahl, Grösse, gegenseitigen Abstand und Aussehen, den natürlichen Zähnen ähneln, die das Prothesensystem zu ersetzen versucht. Die Zähne 6 sind im Profilelement durch nicht näher gezeigte Halterungsorgane befestigt. In seinen vorderen und hinteren Schenkeln hat das Profilelement zwei fluchtend angeordnete Bohrungen 62, 63 (Fig. 6), die nach Positionierung des Brückenteiles 2 auf dem Profilelement 41 mit den Bohrungen 23 (vgl. Fig. 3) fluchten. Die Bohrungen 62, 63 sind mit Innengewinden versehen.

Die Aussenseite (Ober-, Vorder- und Hinterseite) des Profilelements 41 ist mit einem Kunststoffkompositmaterial bekleidet, das soviel als möglich hinsichtlich Form, Aussehen und taktilen Eigenschaften dem Gaumen gleicht. Der Komposit besteht aus einer verhältnismässig weichen, elastisch komprimierbaren Innenschicht 42 aus Urethankunststoff mit geschlossenen, gasgefüllten Zellen, und einer härteren, biegsamen kompakten Aussenschicht 43 aus Polyurethan. Die Schichten 42 und 43 sind am Profilelement 41 und um die Basis der Zähne 6 herum mit einem härtenden Isocyanatkleber angeleimt. Zwischen dem Brückenteil 2 und dem Profilelement 41 ist eine dämpfende Polyurethanschicht 41 angebracht.

Die Zahnbrücke 4 wird am Brückenteil 2 mittels zweier Schrauben 64 montiert. Die Schraube 64 wird durch das Loch 63 im hinteren Schenkel des Profilelements 41 geschraubt, dann durch das fluchtend liegende Loch 23 im Brückenteil 2 geführt und darauf in das Loch 63 im vorderen Schenkel des Profilelements 41 geschraubt. Die die Löcher 63 umgebenden Bereiche im hinteren Schenkel sind nicht von Kompositmaterial bedeckt. Auch die dämpfende Polyurethanschicht 44 weist Löcher zur Durchführung der Schrauben 64 auf.

Das Brückenteil 2 wird mittels beispielsweise eines härtenden Klebers auf Polyurethanbasis oder eines schnellhärtenden Zements auf die Zwischenstücke 3 geleimt oder zementiert. Der Sitz zwischen dem Brückenteil 2 und den Zwischenstücken 3 hat ein Spiel, um die Feineinstellung der Position der Basis 3 und die weitere Aufnahme der Kleberoder Zementschicht 66 zu ermöglichen.

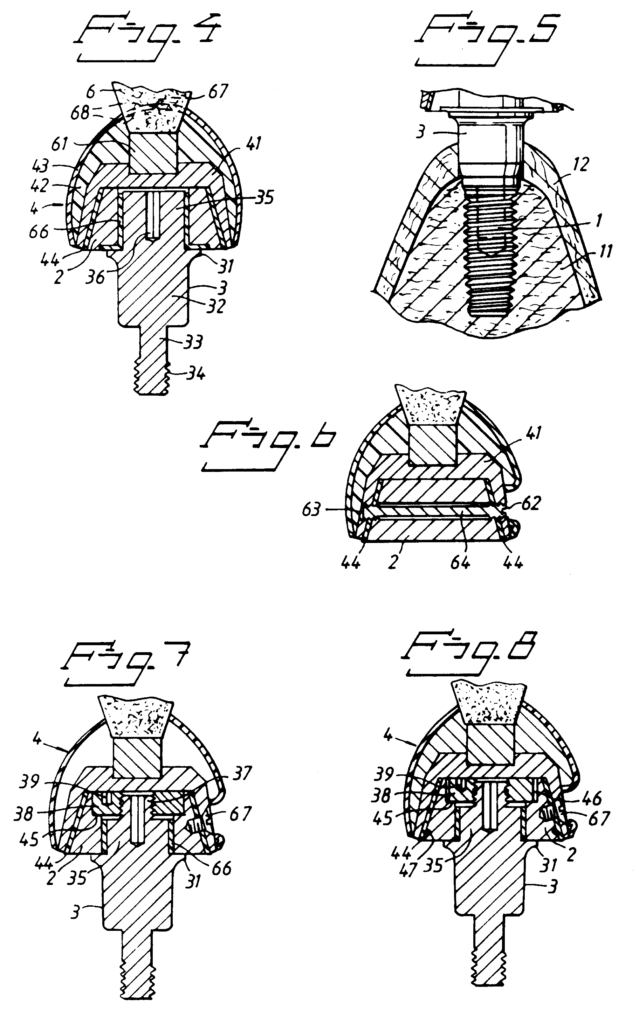

Zwei Varianten des oben beschriebenen Ausführungsbeispiels werden in Fig. 7 und 8 gezeigt. Beide beziehen sich auf die Variationen der Befestigung des Brückenteiles 2 auf den Zwischenstücken 3. In beiden Fällen ist der Sitzendteil 35 des Zwischenstücks 3 ein zylindrischer, mit Aussengewinde versehener Endabschnitt 37 von vermindertem Durchmesser und mit einer aufgeschraubten Ringmutter 38 mit drei Eingriffslöchern 39 zum Eingriff eines Werkzeugs für das Lösen bzw. das Festziehen der Mutter 39, die in angezogenem Zustand gegen einen nach oben gewendeten ringförmigen Absatz 45 im Loch 21 des Brückenteiles 2 anliegt. Dadurch wird das Brükkenteil 2 ohne Vertikalspiel gegen das Zwischenstück 3 verriegelt. Der Variante nach Fig. 7 fehlt auch ein horizontales Spiel, da der Aussendurchmesser der Ringmutter 38 dem Aussenradius des Absatzes 45 entspricht. Die Variante nach Fig. 8 hat noch immer ein Horizontalspiel 46, da der Aussendurchmesser der Ringmutter kleiner ist als der Aussenradius des Absatzes 45; das gleiche gilt für den Aussendurchmesser des Sitzteils 35 im Verhältnis zum Loch 21 im Brückenteil 2. Eine seitliche Verschiebung bei Langzeitanwendung kann durch das Anbringen von Zement oder Polymer im Spielraum verhindert werden, die nach Durchführung der Lagefixierung durch Anziehen der Mutter härten.

Bei der Variante nach Fig. 8 ist ein Dichtungsring 47 in einer entlang der Vorderkante des Brückenelementes 2 laufenden Nut vorgesehen, um das Eindringen von Feuchtigkeit zwischen dem Brückenteil 2 und der Brücke 4 zu verhindern. Auch die Dämpfungsschicht 44 kann eine dichtende Funktion haben. Bei den Varianten nach Fig. 7 und 8 ist die Zahnbrücke 4 am Brückenteil 2 mittels das Brückenteil 2 nicht durchdringenden Schrauben 67 befestigt.

Für alle Teile des Systems, die nur epidermal oder überhaupt nicht an lebendes Gewebe grenzen, können verschiedene Typen von korrosionsresistentem Material verwendet werden, wie Stahllegierungen oder keramische Werkstoffe. Der Gefahr des Entstehens galvanischer Elemente muss jedoch Aufmerksamkeit gewidmet werden, falls verschiedene metallische Werkstoffe verwendet werden.

Das im bevorzugten Ausführungsbeispiel beschriebene System wird wie folgt einoperiert und montiert. Ein dem Kiefer 11 des Patienten angepasstes Brückenteil 2 wird hergestellt oder aus einem existierenden Sortiment von Brückenteilen 2 ausgewählt. Vier vertikale Löcher werden in den Kieferknochen in Abständen und Positionen gebohrt, die denen der Löcher 21 im Brückenteil gleichen. Die Genauigkeit der Bohrung wird durch Herstellung einer Bohrschablone mit Bohrerführung entsprechend dem relativen Abstand und der Position der Löcher 21 im Brückenteil 2 erhöht. Die Fixturen 1 werden einoperiert, d.h. vorsichtig in die im Kieferknochen 11 erzeugten Löcher eingeschraubt, eventuell nachdem die Löcher mit Gewinde versehen wurden.

Während des Einheilens, das einige Wochen bis einige Monate in Anspruch nehmen kann, sollten die Fixturen keiner nennenswerten Belastung, wie etwa durch Kauen, ausgesetzt werden. Das Einheilen im Gewebe kann in bekannter Weise erfolgen, nämlich indem die Aussenenden der Fixturen 1 nach deren Einoperieren mit zu deren Innengewinde passenden Schrauben verschlossen werden und der vor dem Anbringen der Gewebebohrung ausgeschnittene Hautlappen in seine frühere Lage zurückgefaltet wird und festheilen darf. Nach einigen Monaten werden der Hautlappen und die Schraube entfernt, so dass die Zwischenstücke 3 auf den Fixturen 1 montiert werden können. Es ist jedoch von äusserstem Vorteil, wenn das Einoperieren der Fixturen 1 und die Montage sowie die Lagefixierung des Brückenteiles 2 in einer Arbeitsstufe erfolgen kann. Die Ausbildung der Komponenten des vorliegenden Systems fördert ein solches einstufiges Verfahren. In der zweiten Arbeitsstufe werden die Zwischenstücke 3 auf die Fixturen 1 und das Brückenteil 2 auf die Zwischenstücke angeordnet. Die Lagefixierung des Brückenteiles 2 ist von der, wie oben beschriebenen, Wahl des Brückenteiles 2 abhängig. Falls nur härtbare Polymere oder Zement verwendet werden, wie es beim Ausführungsbeispiel nach Fig. 1 - 6 der Fall ist, muss man eine einwandfreie Härtung oder Erstarren abwarten, bevor weitere Schritte vorgenommen werden. Danach wird eine provisorische Gaumenbrücke montiert, d.h. eine Brücke 4, die keine Zähne 6 hat und mit der man nicht kauen kann. Der Umriss einer derartigen Gaumenbrücke in dem Bereich, in dem sie von der der Zahnbrücke 4 abweicht, ist in Fig. 4 angedeutet. Die Gaumenbrücke kann vom Patienten während der Einheilphase getragen werden, d.h. während einiger Wochen bis einiger Monate nach der Operation. In einzelnen Fällen kann auch eine direkte Montage der Zahnbrücke 4 in Frage kommen, ohne dass zuerst eine Gaumenbrükke montiert wird. Die zu unternehmenden Schritte hängen selbstverständlich von der medizinischen Beurteilung im Einzelfall ab.

Ein beträchtlicher Vorteil des vorliegenden Systems liegt darin, dass die Zahnbrücke 4 für Einstellzwecke leicht abgenommen und eventuell zeitweilig durch eine provisorische Brücke ersetzt werden kann. Ein anderer Vorteil liegt darin, dass die Ausbildung des Systems dazu führt, dass ein begrenztes Sortiment von Brückenteilen 2 und zugehörigen Zahnbrücken 4 - beide eventuell als Halbfabrikate, Rohlinge - den hauptsächlichen Bedarf des Patientenmaterials decken. Bei der Gestaltung eines standardisierten Brückensystemsortiments erfolgt die Dimensionierung hauptsächlich ausgehend von folgenden Parametern (Fig. 3 und 4): die Krümmung der unteren Aussenkante 27 des Brückenteiles 2 (annähernd der grosse Radius des Brückenteiles), die Krümmung der unteren Innenkante 28 des Brückenteiles 2 (annähernd der kleine Radius des Brückenteiles) und die Krümmung der durch den jeweiligen Mittelpunkt der Löcher 21 gezogenen Kurve. Ausserdem wird bei der Dimensionierung zweckmässig der Abstand zwischen der Unterseite des Brückenteiles 2 und dem Scheitelpunkt 67 des künstlichen Gaumens 42, 43 oder dem Abstand zwischen der Underseite des Brückenteiles 2 und der Oberseite oder irgendein anderes geeignetes Höhenmass sowie die Länge des Brückenteiles 2 verwendet. Genormte Brückenteile 2 können mit Löchern 21 und zugehörigen übrigen Elementen, wie Gewinden und Anliegeabsätzen, versehen sein, diese können jedoch auch vorteihaft lokal vom Anwender zur optimalen Anpassung an den einzelnen Patienten angebracht werden.

Ein Sortiment des erfindungsgemässen Prothesensystems kann auch Rohlinge für Brückenteile umfassen. Diesen Rohlingen fehlt die zur Befestigung der Zwischenstücke 3 erforderlichen Bohrungen oder Löcher in ihrer Unterseite. Erst im Zusammenhang mit der Anpassung der Prothese an den Patienten wird der Rohling mit solchen Löchern oder Bohrungen versehen; dies erlaubt eine noch bessere Anpassung an die Bedürfnisse des einzelnen Patienten. Aus ähnlichen Gründen kann es auch vorteilhaft sein, wenn das Sortiment auch Rohlinge für Zahnbrücken umfasst, wobei die Rohlinge für Zahnbrücken wenigstens Profilelemente 41 aufweisen; auch diese Rohlinge werden fertig bearbeitet - beispielsweise indem sie der Zahntechniker mit Zähnen versieht - im Zusammenhang mit der Behandlung des einzelnen Patienten.

In den Ausführungsvarianten nach Fig. 7 und 8 ist die genaue Höhenanpassung der Zwischenstücke 3 von Bedeutung. Sie kann auf einfachste Art durch ein Sortiment von nicht gezeigten Zwischenringen, die zum Anbringen auf dem Absatz 31 der Zwischenstücke 3 vorgesehen sind, erfolgen, aber auch andere Methoden, wie beispielsweise Variation der Einschraubtiefe der Zwischenstücke 3 in den Fixturen 1, sind denkbar.

## Patentansprüche

1. Prothesensystem zur Rehabilitierung von Zahnlosigkeit mit vorgefertigten, zur Befestigung am Unter- und Oberkiefer vorgesehenen Elementen, mit einem bogenförmigen Brückenteil (2), zwei oder mehreren, im Kieferknochen implantierbaren, im wesentlichen rotationssymmetrisch ausgebildeten Fixturen (1), mit einer mit künstlichen Zähnen (6) versehenen bogenförmigen Zahnbrücke (4) und mit einem die Zähne (6) tragenden, bogenförmigen Profilelement (41), wobei das Profilelement (41) mit seiner Unterseite anliegbar gegen die Oberseite des Brückenteils (2) angeordnet ist, und mit Befestigungsmitteln (64, 67) für das Profilelement (41) am Brückenteil (2), wobei letztgenannte Befestigungsmittel auf oder im Profilelement (41) vorgesehene Befestigungsmittel umfassen, **gekennzeichnet** durch im wesentlichen rotationssymmetrische Zwischenstücke (3) für jede Fixtur (1), Befestigungsmittel (38) für das Brüchenteil (2) an den Zwischenstücken (3), und Befestigungsmittel für die Zwischenstücke (3) an den Fixturen (1), wobei das Brückenteil (2) ein vorgefertigtes, standardisiertes Element ist.

2. Prothesensystem nach Anspruch 1, dadurch **gekennzeichnet**, dass das Profilelement (41) an seiner Unterseite eine Längsfurche zur Aufnahme des Brückenteiles (2) hat.

3. Prothesensystem nach Anspruch 2, dadurch **gekennzeichnet**, dass die Seitenwände der Furche des Profilelements (41) in Richtung zur Zahnreihe gerade oder gekrümmte Neigung zwecks Anliegens an die Oberseite und die Vorder- bzw. Hinterseite des Brückenteiles (2) aufweisen.

4. Prothesensystem nach den Ansprüchen 1 - 3 , dadurch **gekennzeichnet**, dass die Mittel (64) zur Befestigung des Profilelements (41) am Brückenteil (2) sich im wesentlichen in horizontaler Richtung erstrecken.

5. Prothesensystem nach den Ansprüchen 1 - 4 , dadurch **gekennzeichnet,** dass das Brückenteil (2) auf seiner Unterseite mit jeweils einer zylindrischen Bohrung für jedes Zwischenstück (3) versehen ist, wobei die Bohrung entweder durchgehend (21) oder nicht durchgehend ist und zur Aufnahme eines zylinderförmigen Sitzabschnitts (35) des Zwischenstücks (3) vorgesehen ist.

6. Prothesensystem nach Anspruch 5, dadurch **gekennzeichnet,** dass der Sitzabschnitt (35) des Zwischenstücks (3) sich von Stützorganen (31) zur Abstützung des Brückenelements (2) in Richtung auf das obere Ende des Zwischenstücks (3) erstreckt.

7. Prothesensystem nach den Ansprüchen 1 - 6 , dadurch **gekennzeichnet,** dass das Zwischenstück (3) an seinem unteren Ende mit einem Aussengewinde (34) zur lösbaren Befestigung in einem Innengewinde der Fixtur (1) versehen ist.

8. Prothesensystem nach den Ansprüchen 1 - 7 , dadurch **gekennzeichnet**, dass die Zahnbrücke (4) auf ihrer dem Gaumen abgekehrten Seite wenigstens teilweise mit Kunststoffmaterial bekleidet ist, das eine biegsame, eine elastisch komprimierbare Innenschicht (42) umgebende, Aussenschicht (43) umfasst.

9. Prothesensystem nach Anspruch 8, dadurch **gekennzeichnet,** dass die Aussenschicht (43) an der unteren Vorder- und Hinterkante (27, 28) des Profilelements (41) und an der Basis der Zähne (6) befestigt ist.

10. Prothesensystem nach einem der Ansprüche 1 - 9, dadurch **gekennzeichnet,** dass die Mittel zur Befestigung des Brückenteiles (2) an den Zwischenstücken (3) harte Schichten (66) bildende Mittel, gewählt aus der Gruppe: schnellhärtende Kompositionen, wie härtbare Kunststoffe, besonders härtbare Isocyanate und Polyurethane, und Porzellanzement, Schraubenmittel (38) oder deren Kombinationen, umfassen.

11. Prothesensystem nach einem der Ansprüche 1 - 10, dadurch **gekennzeichnet,** dass die Mittel zur Befestigung der Zahnbrücke (4) am Brückenteil (2) durch Löcher (23) im Brückenteil (2) geführte, im Profilelement (41) lösbar fixierte zweite Schraubenmittel (64; 67) umfassen.

12. Prothesensystem nach einem der Ansprüche 1 - 11, dadurch **gekennzeichnet**, dass Dämpfungsmittel (44) zwischen der Zahnbrücke (4) und dem Brückenteil (2) vorgesehen sind, wobei die Dämpfungsmittel vorzugsweise polymere Werkstoffe umfassen.

13. Prothesensystem nach einem der Ansprüche 1 - 12, dadurch **gekennzeichnet**, dass Abdichtmittel (44, 47) zwischen der Zahnbrücke (4) und dem Brückenteil (2) vorgesehen sind.

14. Prothesensystem nach Anspruch 13, dadurch **gekennzeichnet**, dass die Dämpfungsmittel (44) auch die Abdichtmittel (44) mit einschliessen.

## Claims

1. A prosthesis system for the rehabilitation of toothlessness, having: prefabricated elements provided for attachment to the upper and lower jaws; an arcuate bridge member (2); two or more substantially axially symmetrical fixtures (1) implantable in jaw bone; an arcuate toothbridge (4) provided with artificial teeth (6); and an arcuate profile element (41) bearing the teeth (6), the profile element (1) being disposed with its underside adapted to bear against the top side of the bridge member (2), the system also having means (64, 67) for attaching the profile element (41) to the bridge member (2), the last-mentioned attaching means comprising attaching means provided on or in the profile element (41), characterised by substantially axially symmetrical intermediate members (3) for each fixture (1), means (38) for attaching the bridge member (2) to the intermediate members (3), and means for attaching the intermediate members (3) to the fixtures (1), the bridge member (2) being a prefabricated, standardised element.

2. A prosthesis system according to Claim 1, characterised in that the underside of the profile element (41) has a longitudinal furrow for receiving the bridge member (2).

3. A prosthesis system according to Claim 2, characterised in that the side walls of the furrow of the profile element (41) have in the direction of the row of teeth a straight or curved inclination for the purpose of bearing against the top side and the front/rear side of the bridge member (2).

4. A prosthesis system according to Claims 1-3, characterised in that the means (64) for attaching the profile element (41) to the bridge member (2) extend in substantially the horizontal direction.

5. A prosthesis system according to Claims 1-4, characterised in that the bridge member (2) has on its underside a cylindrical bore for each intermediate member (3), the bore being either continuous (21) or non-continuous and being adapted to receive a cylindrical seat portion (35) of the intermediate member (3).

6. A prosthesis system according to Claim 5, characterised in that the seat portion (35) of the intermediate member (3) extends in the direction of the top end of the intermediate member (3) from supporting members (31) for supporting the bridge element (2).

7. A prosthesis system according to Claims 1-6, characterised in that the bottom end of the intermediate member (3) is provided with an external threading (34) for releasable attachment in an internal threading of the fixture (1).

8. A prosthesis system according to Claims 1-7, characterised in that on its side remote from the gums the tooth bridge (4) is at least partially lined with plastics material comprising a flexible outer layer (43) enclosing a resiliently compressible inner layer (42).

9. A prosthesis system according to Claim 8, characterised in that the outer layer (43) is attached to the lower front and rear edge (27, 28) of the profile element (41) and to the base of the teeth (6).

10. A prosthesis system according to one of Claims 1-9, characterised in that the means for attaching the bridge member (2) to the intermediate members (3) comprise means forming hard layers (66) and selected from the group formed by quick-curing compositions, such as hardenable plastics, more particularly hardenable isocyanates and polyurenthanes, and porcelain cement, screw means (38) or combinations thereof.

11. A prosthesis system according to one of Claims 1-10, characterised in that the means for attaching the toothbridge (4) to the bridge member (2) comprise second screw means (64; 67) guided through holes (23) in the bridge member (2) and releasably fixed in the profile element (41).

12. A prosthesis system according to one of Claims 1-11, characterised in that damping means (44) are provided between the toothbridge (4) and the bridge member (2), the damping means preferably comprising polymeric materials.

13. A prosthesis system according to one of Claims 1-12, characterised in that sealing means (44, 47) are provided between the toothbridge (4) and the bridge member (2).

14. A prosthesis system according to Claim 13, characterised in that the damping means (44) also include the sealing means (44).

## Revendications

1. Système de prothèse pour la réhabilitation pour personnes édentées, comprenant des éléments préfabriqués pour fixation sur les mâchoires inférieure et supérieure, comprenant un élément de bridge cintré (2), deux ou plusieurs fixations (1) de forme pour l'essentiel symétriques en rotation pouvant être implantées dans l'os maxillaire, comprenant un bridge dentaire (4) cintré pourvu de dents artificielles (6) et comprenant un profil (41), cintré portant les dents (6), la face inférieure du profil (41) étant disposée contre la face supérieure de l'élément de bridge (2), et comprenant des moyens de fixation (64, 67) du profil (41) sur l'élément de bridge (2), des derniers moyens de fixation comprenant des moyens de fixation sur ou dans le profil (41), caractérisé par des pièces intermédiaires (3) pour l'essentiel symétriques en rotation pour chaque fixation (1), des moyens de fixation (38) pour la fixation de l'élément de bridge (2) sur les pièces intermédiaires (3) et des moyens de fixation pour la fixation des pièces intermédiaires (3) sur les fixations (1), l'élément de bridge (2) étant un élément préfabriqué standardisé.

2. Système de prothèse selon la revendication 1, caractérisé en ce que le profil (41) présente sur sa face inférieure une fente longitudinale pour recevoir l'élément de bridge (2).

3. Système de prothèse selon la revendication 2, caractérisé en ce que les parois latérales de la fente du profil (41) présentent en direction de la rangée de dents une inclinaison droite ou cintrée pour application contre la face supérieure et les faces avant ou arrière de l'élément de bridge (2).

4. Système de prothèse selon les revendications 1 à 3, caractérisé en ce que les moyens (64) de fixation du profil (41) sur l'élément de bridge (2) s'étendent pour l'essentiel dans le sens horizontal.

5. Système de prothèse selon les revendications 1 à 4, caractérisé en ce que l'élément de bridge (2) présente sur sa face intérieure respectivement un trou cylindrique pour chaque pièce intermédiaire (3), le trou étant soit traversant (21) soit non traversant et prévu pour recevoir une portion de siège cylindrique (35) de la pièce intermédiaire (3).

6. Système de prothèse selon la revendication 5, caractérisé en ce que la portion de siège (35) de la pièce intermédiaire (3) s'étend depuis des organes d'appui (31) pour supporter l'élément de bridge (2) en direction de l'extrémité supérieure de la pièce intermédiaire (3).

7. Système de prothèse selon les revendications 1 à 6, caractérisé en ce que la pièce intermédiaire (3) présente sur son extrémité inférieure un filet mâle (34) pour la fixation amovible dans un filet femelle de la fixation (1).

8. Système de prothèse selon les revendications 1 à 7, caractérisé en ce que le bridge dentaire (4) est revêtu sur sa face opposée au palais au moins partiellement d'une matière plastique comprenant une couche extérieurs (43) flexible entourant une couche intérieure (42) pouvant être comprimée de manière élastique.

9. Système de prothèse selon la revendication 8, caractérisé en ce que la couche extérieure (43) est fixée sur le bord inférieur avant et arrière (27, 28) du profil (41) et sur la base des dents (6).

10. Système de prothèse selon l'une des revendications 1 à 9, caractérisé en ce que les moyens de fixation de l'élément de bridge (2) aux pièces intermédiaires (3) présentent des moyens formant des couches dures (66), choisis parmi le groupe des composés à durcissement rapide, tels que des matières plastiques durcissables, notamment des isocyanates ou des polyuréthanes durcissables, et du ciment à porcelaine, des moyens de visage (38) ou une combinaison de ceux-ci.

11. Système de prothèse selon l'une des revendications 1 à 10, caractérisé en ce que les moyens de fixation du bridge dentaire (4) comprennent sur l'élément de bridge (2) des seconds moyens de vissage (64; 67) fixés de façon amovible dans le profil (41) traversant des trous (23) prévus dans l'élément de bridge (2).

12. Système de prothèse selon l'une des revendications 1 à 11, caractérisé en ce que des moyens d'amortissement (44) sont prévus entre le bridge dentaire (4) et l'élément de bridge (2), les moyens d'amortissement comprenant de préférence des matières polymères.

13. Système de prothèse selon l'une des revendications 1 à 12, caractérisé en ce que des moyens d'étanchéité (44, 47) sont prévus entre le bridge dentaire (4) et l'élément de bridge (2).

14. Système de prothèse selon la revendication 13, caractérisé en ce que les moyens d'amortissement (44) comprennent également les moyens d'étanchéité (44).
